# EUROPÄISCHE PATENTANMELDUNG

(11) **EP 1 467 137 A2**
(43) Veröffentlichungstag der Anmeldung: **13.10.2004**
(21) Anmeldenummer: 04005696.2
(22) Anmeldetag: 10.03.2004
(51) Int. Cl.: F16L 37/084

(54) **Zuggesicherte Muffenrohrverbindung**

(30) Priorität: 09.04.2003 DE 20305711 U
(71) Anmelder: Buderus Guss GmbH, D-35576 Wetzlar (DE)
(72) Erfinder: Hilka, Manfred, 65594 Runkel (DE)

(57) **Zusammenfassung**

Die Erfindung betrifft eine zuggesicherte Muffenrohrverbindung, bei der das Einsteckende eines Rohres in der Muffe eines anderen Rohres durch eine Dichtung aus Gummi in einer umlaufenden Kammer abgedichtet und durch in die Dichtung einvulkanisierte Edelstahlsegmente (S) zum Eingriff auf dem Außenumfang des zugeordneten Einsteckendes gegen Zug gesichert ist. Dabei weist die Dichtung ein freies Ende sowie einen bekannten Haltebereich (H) auf, welcher einer Nut mit einer bekannten Geometrie am Innenumfang der Muffe zugeordnet ist.

Bei einer derartigen Muffenrohrverbindung sollen gemäß der Aufgabenstellung insbesondere die Montagekräfte verringert werden.

Daher ist die Erfindung dadurch gekennzeichnet, dass die Dichtung einen auf die bekannte Geometrie der Nut abgestimmten Haltebereich (H) mit einvulkanisierten Edelstahlsegmenten (S) besitzt und dass der Dichtbereich (D) am freien Ende der Dichtung einen schwalbenschwanzartigen Querschnitt aufweist.

## Beschreibung

Die Erfindung betrifft eine zuggesicherte Muffenrohrverbindung nach dem Oberbegriff des Patentanspruches 1.
Eine Muffenrohrverbindung dieser Art ist der DE-AS 22 26 151 zu entnehmen. Dabei werden Muffenrohre mit einem glatten Einsteckende in der Muffe durch eine Dichtung aus Gummi in einer umlaufenden Kammer abgedichtet. Die Dichtung besitzt einen Dichtbereich am freien Ende sowie einen bekannten Haltebereich. Dieser wird in einer Nut mit einer bekannten Geometrie am Innenumfang der Muffe passgenau gehalten. Dagegen ist der Dichtbereich einer Dichtkammer mit einem größeren Volumen zugeordnet, so dass sich die Dichtung dort entsprechend ausdehnen kann und verpresst wird.
Durch in die Dichtung in Umfangsrichtung einvulkanisierte Edelstahlsegmente mit zahnartigen Innenkanten, welche zum Eingriff auf dem Außenumfang des zugeordneten Einsteckendes dienen, wird die Rohrverbindung in axialer Richtung gegen Zug gesichert. Zusätzlich wird der Dichtbereich der Dichtung aus einem elastischeren Material als der Haltebereich ausgeführt. Trotzdem können sich in einigen Einbausituationen, vor allem in schwierigem Gelände, die notwendigen Montagekräfte zum Herstellen der Rohrverbindung nachteilig auswirken.

Der Erfindung liegt daher die Aufgabe zugrunde, bei einer zuggesicherten Muffenrohrverbindung die Montagekräfte zu verringern.

Erfindungsgemäß wurde dies mit den Merkmalen im Patentanspruch 1 gelöst. Vorteilhafte Weiterbildungen sind den Unteransprüchen zu entnehmen.
Die erfindungsgemäße Muffenrohrverbindung ist dadurch gekennzeichnet, dass die Dichtung einen auf die bekannte Geometrie der Nut abgestimmten Haltebereich mit einvulkanisierten Edelstahlsegmenten besitzt und dass der Dichtbereich am freien Ende der Dichtung einen schwalbenschwanzartigen Querschnitt ausweist. Dieser entsteht, weil der Dichtbereich am freien Ende der Dichtung eine umlaufende Einkerbung aufweist, welche in axialer Richtung geöffnet ist. Die umlaufende Einkerbung ist etwa symmetrisch zum Zentrum des Dichtbereiches angeordnet und reicht im unbelasteten Zustand vorzugsweise auf 15 bis 25 Prozent der Gesamtlänge in den Querschnitt der Dichtung hinein. Im schwalbenschwanzartigen Endbereich schließen die beiden Schenkel im unbelasteten Zustand mit der Einkerbung vorzugsweise einen Winkel von etwa 90 Grad ein. Der Grund der Einkerbung sowie die Übergänge der beiden Schenkel in die Außenkontur des Dichtbereiches sind vorzugsweise mit einem Radius versehen.
Mit der erfindungsgemäßen Anordnung wird eine zuggesicherte Muffenrohrverbindung geschaffen, welche gegenüber herkömmlichen Ausführungen in Bezug auf die Verringerung der Montagekräfte optimiert ist. Besonders das vorhandene Volumen der Dichtkammer ist nun im Verhältnis größer als das zu verpressende Gummivolumen der Dichtung einschließlich des mindestens einen Edelstahlsegmentes. Parallel dazu wird die Elastizität des Dichtbereiches durch die Einkerbung noch erhöht.
Durch den weiterhin gleich gestalteten Haltebereich der Dichtung kann bei Bedarf in alle vorhandenen Muffen mit der bekannten Geometrie jederzeit auch die erfindungsgemäße Dichtung eingesetzt werden, um die besonderen Einbauvorteile zu nutzen. Dadurch ergeben sich flexible Einsatzmöglichkeiten für die zuggesicherte Muffenrohrverbindung, zum Beispiel gemäß den vorliegenden Einbausituationen oder auf Grund spezieller Kundenwünsche, ohne dass ein erhöhter logistischer Aufwand entsteht.

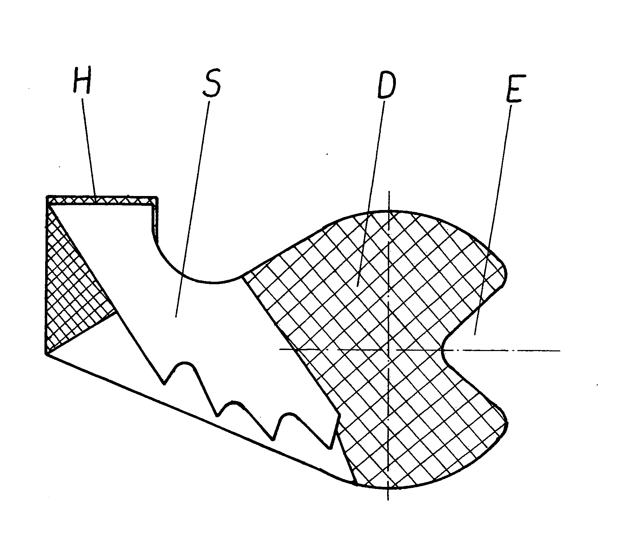

Die Zeichnung stellt ein Ausführungsbeispiel der Erfindung dar und zeigt in einer einzigen Figur den Querschnitt einer Dichtung für die erfindungsgemäße zuggesicherte Muffenrohrverbindung.

Die Dichtung ist auf die bekannte Geometrie herkömmlicher Muffengestaltungen abgestimmt und besitzt einen Haltebereich H sowie einen Dichtbereich D mit einem schwalbenschwanzartigen Querschnitt, einer geringeren Härte und einer umlaufenden Einkerbung E am freien Ende. In die Dichtung einvulkanisierte Edelstahlsegmente S greifen auf dem Außenumfang eines zugeordneten Einsteckendes ein und dienen als Zugsicherung.

## Patentansprüche

1. Zuggesicherte Muffenrohrverbindung, bei der das Einsteckende eines Rohres in der Muffe eines anderen Rohres durch eine Dichtung aus Gummi in einer umlaufenden Kammer abgedichtet und durch in die Dichtung einvulkanisierte Edelstahlsegmente (S) zum Eingriff auf dem Außenumfang des zugeordneten Einsteckendes gegen Zug gesichert ist, wobei die Dichtung ein freies Ende sowie einen bekannten Haltebereich (H) aufweist, der einer Nut mit einer bekannten Geometrie am Innenumfang der Muffe zugeordnet ist,
**dadurch gekennzeichnet, dass** die Dichtung einen auf die bekannte Geometrie der Nut abgestimmten Haltebereich (H) mit einvulkanisierten Edelstahlsegmenten (S) besitzt und dass der Dichtbereich (D) am freien Ende der Dichtung einen schwalbenschwanzartigen Querschnitt aufweist.

2. Zuggesicherte Muffenrohrverbindung nach Anspruch 1,
**dadurch gekennzeichnet, dass** ein schwalbenschwanzartiger Querschnitt entsteht, indem der Dichtbereich (D) am freien Ende der Dichtung eine umlaufende Einkerbung (E) aufweist, welche in axialer Richtung geöffnet ist.

3. Zuggesicherte Muffenrohrverbindung nach den Ansprüchen 1 und 2,
**dadurch gekennzeichnet, dass** die umlaufende Einkerbung (E) etwa symmetrisch zum Zentrum des Dichtbereiches (D) angeordnet ist.

4. Zuggesicherte Muffenrohrverbindung nach einem der Ansprüche 1 bis 3,
**dadurch gekennzeichnet, dass** die Einkerbung (E) im unbelasteten Zustand der Dichtung vorzugsweise auf 15 bis 25 Prozent der Gesamtlänge in den Querschnitt der Dichtung hinein reicht.

5. Zuggesicherte Muffenrohrverbindung nach einem der Ansprüche 1 bis 4,
**dadurch gekennzeichnet, dass** die beiden Schenkel im schwalbenschwanzartigen Endbereich im unbelasteten Zustand mit der Einkerbung (E) vorzugsweise einen Winkel von etwa 90 Grad einschließen.

6. Zuggesicherte Muffenrohrverbindung nach einem der Ansprüche 1 bis 5,
**dadurch gekennzeichnet, dass** der Grund der Einkerbung (E) sowie die Übergänge der beiden Schenkel in die Außenkontur des Dichtbereiches (D) vorzugsweise mit einem Radius versehen sind.
